# EUROPEAN PATENT APPLICATION

(11) **EP 4 282 912 A1**
(43) Date of publication of application: **29.11.2023**
(21) Application number: 22175083.9
(22) Date of filing: 24.05.2022
(51) Int. Cl.: C08L 3/08, B32B 7/12, C09J 103/08

(54) **STARCH-BASED HIGHLY DILUTABLE ADHESIVES FOR TISSUE LAMINATION**

(71) Applicant: Henkel AG & Co. KGaA, 40589 Düsseldorf (DE)
(72) Inventor: AZZOLA, Andrea, 40597 Düsseldorf (DE); SIEBERT, Steven, 40589 Düsseldorf (DE)
(74) Representative: Viering, Jentschura & Partner mbB Patent- und Rechtsanwälte

(57) **Abstract**

The present invention relates to adhesives for paper laminates, more particularly for tissue paper laminates comprising at least one tissue ply that is adhesively bonded to itself (e.g., it is folded over onto itself) or to another surface (e.g., another tissue ply or nonwoven, woven substrate, or the like), the adhesives being aqueous starch-based highly dilutable adhesives comprising at least one modified starch and having a viscosity as defined herein. Also encompassed are the uses and methods of use of such adhesives as well as the products, in particular the laminates obtained by these methods and uses.

## Description

### FIELD OF THE INVENTION

The present invention relates to adhesives for paper laminates, more particularly for tissue paper laminates comprising at least one tissue ply that is adhesively bonded to itself (e.g., it is folded over onto itself) or to another surface (e.g., another tissue ply or nonwoven, woven substrate, or the like), the adhesives being aqueous starch-based highly dilutable adhesives comprising at least one modified starch and having a viscosity as defined herein.

### BACKGROUND OF THE INVENTION

Tissue products are in almost constant use in daily life. Toilet tissue, facial tissue, tissue wipes, and paper towels are examples of tissue products used throughout home and industry. Tissue products can be made of a single lamina (or ply) or can be laminates (or multi-ply, or else laminated) formed from two or more plies. As used herein a "lamina", or "ply", refers to a single sheet of tissue paper, and the term "laminate", or "multi-ply", or "laminated", is used to characterize a paper made by uniting several layers of single sheets or plies together or to another woven or nonwoven substrate to yield a unitized material. The phrase "tissue laminate", as used herein, refers to a laminate including at least one ply of tissue paper unitized with another substrate or ply, and these are well known and recognized by those skilled in the art. "Tissue paper" or "tissue" as used herein, refers to woven or nonwoven substrates that are relatively low weight sheets for use as sanitary products such as facial and bathroom tissues or paper towels. These also may be fabricated in condenser, carbonized, wrapping and cleaning grades. General characteristics may include one or more of softness, adequate strength and absorbency, clean appearance, and freedom from coarse and abrasive particles. In typical embodiments, a tissue may have a sheet basis weight of up to about 50 grams per square meter, more typically about 11 to about 30 grams per square meter.

A single ply tissue product has several drawbacks. For example, a single lamina tissue product will be stiffer than a dual laminae tissue product having the same total basis weight. This increased stiffness results in a consumer perception that the single lamina tissue product is not as soft as a multi-ply tissue product and may, therefore, be less preferred than the multi-ply tissue product. A laminated tissue having the same total basis weight as a single lamina tissue product can be made to have greater caliper. This increased caliper results in the consumer perception that the product has thickness (bulkiness) and high quality. Also, to provide consumers with the convenience of using a predetermined length of material, tissue laminates may be perforated at pre-selected lengths.

However, tissue laminates are subject to the phenomenon of skinning. Skinning occurs when the laminae separate from one another and no longer remain intact to form a unitary laminate. Skinning may occur, for example, when trying to reduce tissue product packaging and transportation costs, such as compression of the tissue product which may impart shear forces to the laminae and result in skinning.

Skinning may also occur during a tissue converting operation when the top sheet of a roll breaks off as a result of friction in the area of contact between the surface in the production line and the roll of paper. It can also occur during handling by the consumer. In the case of perforated toilet tissue skinning can lead to mismatched plies along the perforation lines when a portion of the top sheet of a roll is torn or lost.

Several attempts have been made in the art to join tissue laminae in a manner to reduce or minimize skinning. One approach involves the application of mechanical forces (friction and compression) to interlock the sheets and keep them from separating from each other. These forces are generated by piercing pinholes in the laminates, with the edges of the knurls engraved in a steel roll, to marry the sheets, or by pressing wavy lines in the tissues during embossing. Another approach uses an adhesive to bond laminae together. Such approaches have, for example, been described in international patent publications WO 2005/021623 and WO 2010/015280.

Tissue laminates made with water-soluble adhesives readily break down upon wetting, as, for example, might occur when toilet tissue or facial tissue is disposed of in a sewer system. Consequently, the adhesive used to bond tissue laminae together is desirably aqueous-based (solution, dispersion, emulsion, latex or the like) and at least water-soluble (solution) or water dispersible to some degree. It is also desirable to use aqueous-based adhesives for economical reasons.

While various aqueous adhesives for such purposes are known in the art, for example from WO 2005/021623, these are typically based on any one of polyvinyl alcohol (PVOH), polyvinyl acetate, cellulose ethers, acrylics, and polyurethanes. Of these, PVOH-based adhesives are currently the predominant technology on the market for tissue and towel lamination. A wide variety of products with different viscosities, solid contents and performances are commercially obtainable. However, a major drawback of these adhesives is that they are relying on fossil-based raw material sources and thus are suboptimal in terms of sustainability and in view of environmental concerns. It would therefore be desirable to replace these materials with materials from renewable sources. Furthermore, PVOH-based adhesives are susceptible to contamination with bacteria and fungi and thus require preservatives to provide for extended storage stabilities. The use of such preservatives, although common, always entails the risk that usability for food applications as well as cosmetic applications or any other application in which the tissues come into contact with the user's skin is limited due to toxicity and allergic reasons. Further, there is a general trend that consumers increasingly prefer preservative-free products in many fields in which those are available.

There is thus need for alternative adhesives for tissue bonding that are more sustainable and have reduced contents of fossil-based ingredients. Further, it is particularly desirable if such adhesives could be provided without the need for preservatives.

### SUMMARY OF THE INVENTION

The present invention is based on the inventors surprising finding that the above object could be achieved by use of starch-based aqueous and highly dilutable adhesive compositions that preferably have an alkaline pH to obviate the need of preservatives.

In a first aspect the present invention is therefore directed to liquid aqueous adhesive compositions comprising at least one modified starch in an amount relative to the total weight of the composition of 2 to 60 wt.-%, preferably 5 to 50 wt.-%, wherein the adhesive composition has a dynamic viscosity of 10.000 to 40.000 mPa*s at 23°C, preferably 15.000 to 30.000 mPa*s (measured according to Brookfield with a Brookfield viscosimeter RVT, spindle 6, at 20 rpm).

In another aspect, the invention features the use of the liquid aqueous adhesive compositions according to the invention as an adhesive for ply bonding, preferably to paper ply bonding, more preferably to tissue paper ply bonding.

In a still further aspect, the invention is directed to a method for the production of a product comprising at least two plies, preferably 2 to 5 tissue plies, more preferably tissue paper plies, the method comprising:
(a) applying the liquid aqueous adhesive composition according to the invention or a dilution in water thereof at a mass ratio of adhesive : water of 1:1 to 1:15 or 1:1 to 1:11, preferably 1:4 to 1:8, to a first ply of the at least two plies; and
(b) bonding the first ply with the adhesive obtained in (a) to a second ply and, optionally, further plies.

The present invention further encompasses the products obtainable according to the methods of the invention, wherein the product is preferably a paper laminate, more preferably tissue paper laminate.

These and other aspects, features and advantages of the invention become apparent to the skilled person in the following detailed description and claims. Each feature from one aspect of the invention can be used in any other aspect of the invention. Furthermore, the examples contained herein are intended to describe and illustrate the invention, but do not restrict it and in particular, the invention is not limited to these examples.

"At least one", as used herein, refers to one or more, i.e. 1, 2, 3, 4, 5, 6, 7, 8, 9 or more of the referenced species. In connection with a given species, the term does not relate to the total amount of molecules, but to the type of compound. "At least one modified starch" therefore means, for example, that only one type of modified starch or several different types may be included, without specifying the amount of each compound.

All percentages given herein in relation to the compositions or formulations relate to weight % relative to the total weight of the respective composition or formula, if not explicitly stated otherwise. Numeric ranges specified in the format "from x to y" include the specified values. If multiple preferred numeric ranges are specified in this format, it is understood that all ranges created by combining the different endpoints are also included.

Numeric ranges specified in the format "in/from x to y" include the specified values. If several preferred numerical ranges are specified in this format, it is natural that all ranges resulting from the combination of the different endpoints are also included.

Numeric values specified without decimal places here refer to the full value specified with one decimal place, i.e. for example, 99 % means 99.0 %, unless otherwise defined.

The terms "about" or "approximately", in connection with a numerical value, refer to a variance of ±10 %, preferably ±5% or ±1%, with respect to the given numerical value.

Where reference is made herein to molar masses, this information always refers to the number-average molar mass Mₙ, unless explicitly stated otherwise. The number average molar mass can be determined, for example, by gel permeation chromatography (GPC) according to DIN 55672-1:2007-08 with THF as eluent. The weight average molecular weight M_{w} can also be determined by GPC as described for Mₙ.

### DETAILED DESCRIPTION

The present invention relates to liquid aqueous adhesive compositions comprising at least one modified starch in an amount relative to the total weight of the composition of 2 to 60 wt.-%, preferably 5 to 50 wt.-%, wherein the adhesive composition has a dynamic viscosity of 10.000 to 40.000 mPa*s at 23°C, preferably 15.000 to 30.000 mPa*s (measured according to Brookfield with a Brookfield viscosimeter RVT, spindle 6, at 20 rpm).

"Liquid", as used in this connection, relates to the property that the compositions are liquid at standard conditions, i.e. 20°C and 1013 mbar. This term does however include pasty and gel-like compositions as well as liquids with Non-Newtonian behavior, such as those having a yield point.

"Aqueous", as used in this context, refers to the fact that the compositions comprise water, namely as a solvent, typically as the predominant or only solvent. In various embodiments, this means that relative to the total content of solvents, the water content is at least 50 wt.-%, preferably 60, 70, 80 or 90 wt.-%.

In some embodiments, it may be preferred that while water is the major solvent, the composition further comprises small amounts of organic solvents, in particular alcohols, more particularly polyols, such as 1,2 or 1,3-propane diol, glycol or glycerol, in particular glycerol. The amount of such organic solvents is preferably not higher than 10 wt.-% relative to the total weight of the composition, more preferably 5 wt.-% or less. In preferred embodiments, the compositions comprise an organic solvent that may also be obtainable from renewable sources, for examples plants, such as glycerol, in an amount of about 0.1 to 5 wt.-%, preferably about 0.5 to 5 wt.-%. In may be preferred that this organic solvent is the only additional solvent besides the water present.

The water content in the adhesives of the present invention is preferably at least 40 wt.-%, typically 45 to 90 wt.-%, preferably 50 to 80 wt.-% or 55 to 80 wt.-% or 60 to 80 wt.-%.

The adhesives of the invention are preferably highly dilutable, i.e. they can be diluted with water to yield a ready-to-use formulation at least at a mass ratio of adhesive to water of 1:1, preferably at least 1:2. Typical dilution rates go up to 1:15, preferably up to 1:11 or 1:10 or 1:9, with preferred ranges being in the range of 1:3 to 1:11, preferably 1:4 to 1:9 or 1:4 to 1:8, such as 1:4, 1:5, 1:6, 1:7 or 1:8. In various embodiments, it can be preferred that the adhesive is a concentrate, i.e. is to be diluted with water prior to use. The liquid aqueous adhesive composition according to the invention is thus, in various embodiments, designed and intended to be diluted with water prior to use in a mass ratio of adhesive : water of 1:1 to 1:11, preferably 1:4 to 1:8. The adhesives of the invention are, due to these properties, particularly suited for use on the converting lines.

The diluting medium or diluent, as described herein, is preferably water or at least a solvent that is water-based and comprises water as the main constituent, i.e. pf at least 80 wt.-% or more, typically 90 wt.-% or more, such as 95 wt.-% up to 100 wt.-%. The water used for dilution may be deionized water to avoid contamination with any undesired salts, solutes or ions.

The adhesives of the invention are starch-based in that they comprise at least one modified starch. The amount of starch present is generally in the range of 2 to 60 wt.-%. The lower limit may be 2, 3, 4, 5, 6 or 7 wt.-%, with the upper limit being 60, 55, 50, 45, 40, or 35 wt.-%. Typical amounts range, depending on the type of starch used, from about 5 to about 50 wt.-% or to about 40 wt.-%, relative to the total weight of the adhesive composition. These amounts are intended to encompass, in the sense of the present invention, any polysaccharide on the basis of alpha-D-glucose with amylose- and amylopectin-components. It thus covers enzymatically and chemically modified and degraded and gelatinized starch as long as it is present in such polysaccharides.

In various embodiments, the starches used may not be completely soluble in water. In such embodiments, the adhesive compositions of the invention have the form of dispersions, with the water-based solvent being the continuous and at least the modified starch being the dispersed phase. The adhesive composition may thus, in various embodiments, have a solid content of 2 to 60 wt.-%, preferably 5 to 50 wt.-%.

The modified starch is, in various embodiments, starch modified by (acid) hydrolysis, enzymatic or chemical modification or degradation, oxidation or sonication. Suitable methods for starch degradation are well-known and widely practiced in the art and such starches are commercially available. In some instances, the modified starch is starch obtained from acid hydrolysis or enzymatic modification/degradation. Such starches may be obtained from natural starches, such as those obtained from vegetables and plants, in particular cereal starches, preferably corn, barley, wheat, or rice starch, tuber or root starches, preferably potato, sweet potato, cassava, or tapioca starch, legume starches, preferably pea or bean starches, and sago or amaranth starch, including starches with high amylopectin content (waxy starches), by subjecting them to hydrolysis conditions or treatment with enzymes. The starch may be amylose and may be degraded by acid hydrolysis to yield shorter chain polysaccharides that are fragments of the original long polysaccharide molecules. Similarly, such fragments may be created by enzymatic activity, for example by amylases, such as alpha-amylases. The modified starches of the invention are not celluloses or modified celluloses.

Starches of natural origin typically have an amylose content of 20 to 40 wt.-% depending on the plant species from which they are obtained. This amylose content is also preferred in the sense of the present invention. However, there are also amylopectin-rich starches (waxy starches) in certain plant cultivars that may also be used according to the present invention. As these are already highly branched, the processes described herein can even increase said branching.

Methods for degradation of starches are well known in the art. Oxidizing agents for oxidative breakdown include, but are not limited to, chromic acid, permanganate, hydrogen peroxide, nitrogen dioxide, hypochlorite, periodate, and peracids such as, for example, peracetic acid. Hydrochloric acid, sulfuric acid, or phosphoric acid may be used as acids for acid-hydrolytic breakdown, but the use of other acids such as, for example, acetic acid, oxalic acid, sulfurous acid, perchloric acid, or trichloroacetic acid is also possible. Enzymes that can be used to break down starches are alpha- and beta-amylases, as well as the glucoamylases and debranching enzymes.

The modified starch used in accordance with the presence invention may be digested, degraded or solubilized starch. Such starches are obtainable by gelatinization of native starch granules to obtain water-soluble starch. In such a gelatinization process the intermolecular bonds or starch molecules are broken down in the presence of water and heat, allowing the hydrogen bonding sites to engage more water. This more or less irreversibly dissolves the starch granule in water, with water acting as a plasticizer, yielding a polymeric solution or dispersion. Such gelatinized starch may then chemically or enzymatically modified or degraded or rearranged.

In the context of the present invention, a starch is considered as sufficiently gelatinized if its dynamic viscosity as a 40 % by weight solution in deionized water at 20°C has a viscosity measured according to Brookfield (Brookfield RVT, Spindle 7 and 20 rpm) of less than 500.000 mPa*s.

In various embodiments, the modified starches of the invention are chemically or enzymatically modified by derivatizing the starches or increasing its branching. In some embodiments, the modified starches are thus not (unmodified) starch hydrolysates or starch fragments, although these may be used as a starting product for further modification as described herein below. The modified starches of the invention are preferably obtained by chemical or enzymatic modification of natural starches, as will be described in the following.

In various embodiments, the modified starch is selected from starch ethers, preferably alkyl, alkenyl, aryl, arylalkyl, cycloalkyl and cycloalkenyl ethers and the corresponding hydroxy ethers. The corresponding hydroxy ethers include the corresponding hydroxyalkyl ethers, hydroxyalkenyl ethers, etc. The alkyl and alkenyl groups in such starch ethers are typically short-chain alkyl and alkenyl groups, such as C1-C6 alk(en)yl groups, in particular methyl, ethyl, propyl, and butyl groups, including 1-propyl, 2-propyl, 1-butyl, 2-butyl, isobutyl and tert-butyl. The aryl groups are preferably C6 to C14 aryl groups, preferably monocyclic groups, such as phenyl. Preferred arylalkyl groups include benzyl. Cycloalk(en)yl groups include, but are not limited to, cyclohexyl and cyclohexenyl.

In various embodiments, suitable starch ethers are selected from the group consisting of allyl ethers, benzyl ethers, hydroxyethyl ethers, hydroxypropyl ethers, hydroxybutyl ethers, and 2-hydroxy-3-butenyl-ethers, with hydroxypropyl ethers being particularly preferred. In various embodiments, the modified starches include or consist of starch ethers, such as hydroxypropyl starch (CAS 9049-76-7). Hydroxypropyl starch may, for example, be produced by reacting starch, for example potato starch, typically provided in form of an aqueous solution, with propylene oxide in the presence of a base, such as NaOH. As a side product 1,2-propanediol (CAS 57-55-6) is also generated in this reaction. Hydroxypropylated starch, such as hydroxypropylated extruded potato starch is, for example, commercially obtainable as Emcol HE (ex Emsland Group).

In various embodiments, the modified starch is selected from starch esters, preferably organic acid esters, such as esters of starch with C1 to C20 mono- and dicarboxylic acids, including, without limitation, formate, acetate, propionate, butyrate, dodecanoate, octadecenoate, alkyl succinate and alkenyl succinate esters. For the succinate esters the same definition of the alkyl and alkenyl groups given above applies.

In still further embodiments, the modified starches include amides, ketones, aldehydes, acetals and ketals, carboxylates, phosphates, sulfates, sulfonates, amines, and ammonium group-containing starch derivatives. Amides are obtainable by reacting carboxylated or acid modified starches with amines or ammonia, thus obtaining the corresponding amides. Ketones, aldehydes and carboxylates are obtainable by oxidizing the hydroxyl groups present in the starch. Carboxylates, phosphates, sulfates and sulfonates are obtainable by replacing the hydroxy groups either directly with a carboxylate, phosphate, sulfate or sulfonate group or an organic moiety, such as an alkyl, alkenyl, aryl, arylalkyl, or cycloalk(en)yl group that includes such a carboxylate, phosphate, sulfate and sulfonate group. Examples or the latter include, for example, carboxymethyl and carboxyethyl starches. Amines and ammonium-containing starches are obtainable by replacing hydroxy groups with amino or ammonium groups.

In various embodiments, the modified starch may be carboxymethyl or carboxyethyl starch, for example carboxymethyl starch. Carboxy methyl starch obtained from maize starch is, for example, commercially obtainable as Emprint CE (ex Emsland Group).

It is understood that in all modified starches described herein, the starches typically retain hydroxy groups and the modification is thus only a partial modification. It is further contemplated that the modified starches described herein comprise any combination of the possible modifications discussed above. For example, the starch may thus be a hydroxypropyl-carboxymethyl starch. However, in some embodiments, the modified starch is not hydroxypropyl-carboxymethyl starch.

In various preferred embodiments, the modified starch is enzymatically modified starch having a dynamic viscosity of less than 500.000 mPa*s, measured as a 40 wt.-% solution in deionized water at 20°C according to Brookfield (Brookfield RSV, Spindle 7 at a viscosity of >50.000 mPa*s and Spindle 6 at a viscosity of ≤50.000 mPa*s , 20 rpm), and obtainable from natural starch by modification with a glycogen branching enzyme (EC 2.4.1.18). In specific embodiments, the enzymatically modified starch has a dynamic viscosity of less than 200.000 mPa*s, preferably less than 100.000 mPa*s, more preferably less than 50.000 mPa*s, but preferably at least 10.000 mPa*s. Lower viscosities than 10.000 mPa*s may cause undesired longer process times and color instability. In the preferred range of less than 200.000 mPa*s gelling and recrystallization may be suppressed, which is favorable.

Such an enzymatically modified starch may be selected from cereal starches, preferably corn, barley, wheat, or rice starch, tuber or root starches, preferably potato, sweet potato, cassava, ortapioca starch, legume starches, preferably pea or bean starches, and sago and amaranth starches, including waxy starches derived from said plants, more preferably potato starch.

For obtaining the enzymatically modified starches described above, the starch may be gelatinized, as described above, and then treated with a glycogen branching enzyme, in particular those of EC class 2.4.1.18.

Native starch consists of two components, the essentially linear amylose with α-1,4 glyosidic bonds and the branched α-1,6 branched amylopectin. Branching enzymes are enzymes that are capable of converting α-1,4-glycosidic bonds into α-1,6-glycosidic bond, thus creating additional branching points. During incubation of such enzymes with the starch the linear structure is broken down by cleaving 1,4-glycosidic bonds and transferring the thus obtained fragments of the linear molecules to new branching points by creating new apha-1,6-glycosidic bonds. This shortens average side chain length and significantly reduces the potential for intermolecular interactions of the newly branched molecules. The thus obtained starch combines a number of functional properties, such as low viscosity at high concentrations, less or no retrogradation, transparency of solutions and a sufficiently high wet tackiness.

The present invention thus also relates to the use of such (gelatinized and) enzymatically modified starch having a dynamic viscosity of less than 500.000 mPa*s, measured as a 40 wt.-% solution in deionized water at 20°C according to Brookfield (Brookfield RSV, Spindle 7 at a viscosity of >50.000 mPa*s and Spindle 6 at a viscosity of ≤50.000 mPa*s , 20 rpm), and obtainable from natural starch by modification with a glycogen branching enzyme (EC 2.4.1.18). The level of branching may vary and is dependent on the desired application. Typically, the gelatinized and enzymatically modified starch has a molecular branching level of at least 4%. In preferred embodiments, the gelatinized and enzymatically modified starch has a molecular branching level of at least 5.0 %, more preferably at least 5.5% or in range of 5.5 to 6.5%. The level of molecular branching referred to means the amount of alpha-1,6 glycosidic bonds relative to the total amount of alpha-1,4- and alpha-1,6-glycosidic bonds ((α -1,6 /(α- 1,6 + α-1,4) *100%) and can be determined according to methods known in the art. Typically the upper limit of branching is about 8.0%, preferably 7.5% or less.

Prior to contacting with the branching enzyme, the starch or derivative thereof is preferably gelatinized, as described above. The gelatinized starch may be adjusted to a desired pH by the addition of an acid or base. After the desired pH and temperature are reached, the branching enzymes is added and the starch solution kept at a pre-determined temperature that allows enzyme activity for a certain period of time needed for the branching. Alternatively, the enzyme may be added to a slurry of the starch in water and then heated to the desired temperature under agitation, such as stirring.

The branching enzyme may be derived from any suitable microbial source. Preferably, it is a thermostable glycogen branching enzyme obtained from a mesophil or thermophil organism, such as an enzyme obtained from *Aquifex aeolicus, Anaerobranca gottschalkii* or *Rhodothermus obamensis.*

The enzymatically modified starches may comprise additional starch molecules, including those that are not modified as described herein. In preferred embodiments, the modified starches according to the invention represent at least 65 wt.-%, preferably at least 80 wt.-%, more preferably at least 90 wt.-% of the total starches.

The liquid aqueous adhesive compositions of the invention preferably have a pH (measured at 20°C) in the range of 9.0 to 12.0, preferably 10.0 to 11.5. This alkaline pH obviates the need for the addition of preservatives, as it prevents bacterial or fungal growth in the compositions for extended periods of time, for example during storage. It has further been found that such pH values do not negatively impact the stability of the compositions and components thereof.

In various embodiments, the adhesive compositions of the invention, in particular those having the pH values indicated above are thus free of preservatives, in particular free of preservatives that have the potential to be toxic and irritating upon skin contact, such as formaldehyde-releasing compounds, compounds of the family of isothiazolinones, including chloro-, methyl-and benzo-isothiazolinones, as well as nitro compounds, such as bronopol (2-bromo-2-nitro-1,3-propanediol). In preferred embodiments, none of these compounds is comprised in the compositions of the invention. "Free of", as used in this context, means that these have not purposively added and that their amount in the compositions is less than 1 % by weight, preferably less than 0.5 wt.-% or less than 0.1 % by weight of even less than 0.05 % by weight (all relative to the total weight of the composition) or that their amount is so low that it is not detectable at all by conventional means.

In addition to the modified starch and the water, as disclosed herein above, the adhesive composition may additionally comprise additives, such as any one or more of antifoams, humectants, pH adjusting agent, preservatives (although those are not particularly preferred), organic solvents (as detailed above), colorants, dyes, pigments, and perfumes, preferably antifoams, humectants, pH adjusting agent, and organic solvents.

Suitable humectants may include longer chain diols, such as heptane diol or octane diol. pH adjusting agents include hydroxides, in particular alkali metal hydroxides, such as sodium hydroxide, organic acids, such as acetic acid or citric acid, and inorganic acids, such as sulfuric acid. Preferred are hydroxides, in particular sodium hydroxide, citric acid and sulfuric acid.

If preservatives are used, these are preferably not the ones listed herein as being toxic or irritating. In various instances, it may be beneficial to use certain agents that have some bacteriostatic effects as a side effect and are used primarily for a different purpose, such as citric acid. In some embodiments, small amounts of hydrogen peroxide may be added, which may also beneficially affect viscosity and serve as a disinfectant.

In some embodiments, the adhesive composition contains citric acid or a salt thereof, preferably in an amount of 0.5 to 3 wt.-%, such as 1.0 to 2.5 wt.-%. In such embodiments, citric acid may be used.

The antifoam, if present, is typically used in amounts of up to 1 wt.-%, for example up to 0.7 wt.-% or up to 0.5 wt.-%, for example at least 0.1 wt.-%. In various embodiments, the adhesive is not a foamed adhesive and is not used in form of a foam at the time of application. To ensure this non-foaming properties it may be preferred to include an antifoam.

Sodium hydroxide may be used in amount of 0.01 to 5 wt.-%, depending on the amounts needed to obtain the desired pH. The same applies to the mineral acids used, such as sulfuric acid.

Hydrogen peroxide may be used in absolute amounts of 0.01 to 0.1 wt.-%, typically in form of a solution (about 35%) in water.

All amounts given above are relative to the total weight of the adhesive composition.

In various embodiments, the total amount of the additives/additional ingredients, such as those described above, does not exceed 15 wt.-%, preferably is up to 10 or up to 8 wt.-%, relative to the total weight of the composition.

The adhesive compositions described herein are preferably used as adhesives for ply bonding, preferably to paper ply bonding, more preferably to tissue paper ply bonding, with said use also forming part of the present invention. In such ply bonding process, 2 to 5 plies may be bonded, preferably 2, 3 or 4 plies. The plies may be fibrous webs, including woven and non-wovens, typically they are tissue plies, preferably paper tissue plies. Such tissue plies may be those typically used for toilet paper, kitchen paper, paper towels, facial tissue, cosmetic wipes, paper handkerchiefs and the like.

As described above in relation to the adhesive, also in such uses the adhesives described herein are typically used as a dilution in water in a mass ratio of adhesive : water of 1:1 to 1:15 or 1:1 to 1:11, preferably 1:4 to 1:8.

The invention further relates to a method for the production of a product comprising at least two plies, preferably 2 to 5 tissue plies, more preferably tissue paper plies, the method comprising:
(a) applying the liquid aqueous adhesive composition according to any one of claims 1 to 11 or a dilution in water thereof at a mass ratio of adhesive : water of 1:1 to 1:15 or 1:1 to 1:11, preferably 1:4 to 1:8, to a first ply of the at least two plies; and
(b) bonding the first ply with the adhesive obtained in (a) to a second ply and, optionally, further plies.

In such methods, the line speed of the production may be 5 to 600 m/min, for example 50 to 600 m/min, preferably at least 100 m/min, with a preferred range being 450 to 600 m/min. Said "line speed" relates to the total length of the plies bonded in 1 minute. The plies are typically provided on very large rolls and the bonded tissue laminate is typically again winded on rolls.

In the methods of the invention, the method may further comprise applying pressure in step (b) to bond the two plies. Said step of contacting the two plies may also comprise a step of embossing the paper laminate, i.e. step (b) may comprise of embossing the at least two plies prior to, during and/or after the bonding.

The adhesive is generally diluted and thus has a viscosity that allows its penetration of the paper plies to bond numerous plies that may already be stacked in a single step. The application of the adhesive may occur via an embosser with the adhesive being applies to at least the protrusions or the elevated portions of the embosser and thus being applied to the plies during the embossing via the embosser.

The invention also relates to the products obtainable according to the methods and uses described herein. Such products include, without limitation, paper laminates, preferably tissue paper laminates, such as multi-ply bathroom tissue, toilet paper, kitchen paper, paper towels, facial tissue, cosmetic wipes, paper handkerchiefs and the like.

All embodiments disclosed herein in relation to the adhesive compositions are similarly applicable to the uses, methods and products and vice versa. The invention is further illustrated by the following examples, without being limited thereto. All documents cited herein are incorporated by reference in their entirety.

### EXAMPLES

The following formulations were prepared and successfully tested as tissue paper ply adhesives. The listed ingredients were added in the given sequence:

**Table 1: Adhesive compositions (all values in wt.-% relative to total weight)**

| | | 1 | 2 | 3* |
|---|---|---|---|---|
| 1a | Hydroxypropyl starch (obtained from reacting potato starch with propylene oxide) | - | - | 34.0 |
| 1 | Water | 58.2 | 78.0 | 51.2 |
| 2 | Antifoam (TEGO KS53) | 0.35 | 0.35 | 0.35 |
| 3a | Hydroxypropylated potato starch ether (EMCOL HE ex Emsland) | 25.0 | - | - |
| 3a | Carboxymethylated maize starch ether (EMPRINT CE ex Emsland) | - | 7.0 | - |
| 3b | Sodium Hydroxide (50 wt.-% in water) | 2.0 | 0.2 | - |
| 3c | Sulfuric acid (50 wt.-% in water) | 0.1 | 0.1 | 0.1 |
| 4 | Hydrogen peroxide (35 wt.-% in water) | 0.075 | 0.075 | 0.075 |
| 5 | Water | 7.5 | 7.5 | 7.5 |
| 6 | Citric acid (anhydrous) | 1.75 | 1.75 | 1.75 |
| 7 | Glycerol | 3.5 | 3.5 | 3.5 |
| 8 | Water | 1.275 | 1.275 | 1.275 |
| 9 | Citric acid (anhydrous) | 0.25 | 0.25 | 0.25 |

3a, 3b and 3c were added as a premix, if present. After each addition the mixture was mixed, as necessary. After addition of 3a, 3b and 3c it was heated to 70°C and kept at this temperature during addition of 4. Before addition of 8 and 9, viscosity, pH and solid content were determined and 8 and 9 added as necessary.

Adhesive formulation 3 was successfully tested with an applicator system (tissue laminator with DESL embossing unit) at a dilution ratio with water of up to 1:8 for bonding of 2 or 3 plies at 19 gsm (57 gsm total) to produce kitchen paper at a line speed of up to 500 m/min and at dilution rate of up to 1:11 for bonding of 2 or 3 plies at 15 gsm to produce toilet paper at a line speed of up to 600 m/min.

## Claims

1. Liquid aqueous adhesive composition comprising at least one modified starch in an amount relative to the total weight of the composition of 2 to 60 wt.-%, preferably 5 to 50 wt.-%, wherein the adhesive composition has a dynamic viscosity of 10.000 to 40.000 mPa*s at 23°C, preferably 15.000 to 30.000 mPa*s (measured according to Brookfield with a Brookfield viscosimeter RVT, spindle 6, at 20 rpm).

2. The liquid aqueous adhesive composition according to claim 1, wherein the pH of the composition (measured at 20°C) is in the range of 9.0 to 12.0, preferably 10.0 to 11.5.

3. The liquid aqueous adhesive composition according to any one of claims 1 to 2, wherein the adhesive composition is diluted with water prior to use in a mass ratio of adhesive : water of 1:1 to 1:15 or 1:1 to 1:11, preferably 1:4 to 1:8.

4. The liquid aqueous adhesive composition according to any one of claims 1 to 3, wherein the modified starch is starch modified by (acid) hydrolysis, enzymatic or chemical modification or degradation, oxidation or sonication, preferably enzymatic or chemical modification.

5. The liquid aqueous adhesive composition according to any one of claims 1 to 4, wherein the modified starch is selected from starch ethers, preferably alkyl, alkenyl, aryl, arylalkyl, cycloalkyl and cycloalkenyl ethers or the corresponding hydroxy ethers, starch esters, preferably organic acid esters, amides, ketones, aldehydes, acetals and ketals, carboxylates, phosphates, sulfates, sulfonates, amines, and ammonium group-containing starch derivatives and combinations thereof.

6. The liquid aqueous adhesive composition according to claim 5, wherein the modified starch is selected from starch ethers selected from allyl ether, benzyl ether, hydroxyethyl ether, hydroxypropyl ether, hydroxybutyl ether, 2-hydroxy-3-butenyl-ether, carboxymethyl ether, starch esters selected from formate, acetate, propionate, butyrate, dodecanoate, octadecenoate, alkyl succinate and alkenyl succinate ester, carboxylate, ketone and aldehyde, more preferably hydroxypropyl ethers and carboxymethyl ethers, most preferably hydroxypropyl ethers.

7. The liquid aqueous adhesive composition according to any one of claims 1 to 4, wherein the modified starch is enzymatically modified starch, having a dynamic viscosity of less than 500.000 mPa*s, measured as a 40 wt.-% solution in deionized water at 20°C according to Brookfield (Brookfield RVT, Spindle 7 at a viscosity of >50.000 mPa*s and Spindle 6 at a viscosity of ≤50.000 mPa*s , 20 rpm), and obtainable from natural starch by modification with a glycogen branching enzyme (EC 2.4.1.18).

8. The liquid aqueous adhesive composition according to claim 7, wherein the enzymatically modified starch
(1) has a dynamic viscosity of less than 200.000 mPa*s, preferably less than 100.000 mPa*s, more preferably less than 50.000 mPa*s, but preferably at least 10.000 mPa*s; and/or
(2) is selected from cereal starches, preferably corn, barley, wheat, or rice starch, tuber or root starches, preferably potato, sweet potato, cassava, or tapioca starch, legume starches, preferably pea or bean starches, and sago and amaranth starches, including waxy starches derived from said plants, more preferably potato starch.

9. The liquid aqueous adhesive composition according to any one of claims 1 to 8, wherein the composition is free of preservatives.

10. The liquid aqueous adhesive composition according to any one of claims 1 to 9, wherein the composition comprises one or more additives, preferably selected from antifoams, humectants, pH adjusting agent, preservatives, organic solvents, colorants, pigments, and perfumes, more preferably antifoams, humectants, pH adjusting agent, and organic solvents, wherein the total amount of the additives does preferably not exceed 15 wt.-%.

11. Use of the liquid aqueous adhesive composition according to any one of claims 1 to 10 as an adhesive for ply bonding, preferably to paper ply bonding, more preferably to tissue paper ply bonding, wherein, optionally, the paper has 2 to 5 tissue plies, preferably 2, 3 or 4 tissue plies.

12. The use of claim 11, wherein the liquid aqueous adhesive composition according to any one of claims 1 to 10 is used as a dilution in water in a mass ratio of adhesive : water of 1:1 to 1:11, preferably 1:4 to 1:8.

13. Method for the production of a product comprising at least two plies, preferably 2 to 5 tissue plies, more preferably paper plies, the method comprising:
(a) applying the liquid aqueous adhesive composition according to any one of claims 1 to 10 or a dilution in water thereof at a mass ratio of adhesive : water of 1:1 to 1:15 or 1:1 to 1:11, preferably 1:4 to 1:8, to a first ply of the at least two plies; and
(b) bonding the first ply with the adhesive obtained in (a) to a second ply and, optionally, further plies.

14. The method according to claim 13, wherein
(1) the line speed of the production is 5 to 600 m/min, preferably 450 to 600 m/min; and/or
(2) the method further comprises applying pressure in step (b) to bond the two plies; and/or
(3) step (b) comprises embossing the at least two plies prior to, during and/or after the bonding.

15. Product obtainable according to the method according to any one of claims 13 to 14, wherein the product is preferably a paper laminate, more preferably tissue paper laminate.
